(19) Europäisches Patentamt
European Patent Office
Office européen des brevets

(11) Veröffentlichungsnummer: **0 685 518 A2**

(12) **EUROPÄISCHE PATENTANMELDUNG**

(21) Anmeldenummer: **95107789.0**

(22) Anmeldetag: **22.05.95**

(51) Int. Cl.[6]: **C08K 5/51**, C08K 3/00, C08L 67/02, //(C08L67/02, 69:00),(C08L67/02,69:00,51:04), (C08L67/02,51:04)

(30) Priorität: **03.06.94 DE 4419569**

(43) Veröffentlichungstag der Anmeldung: **06.12.95 Patentblatt 95/49**

(84) Benannte Vertragsstaaten: **DE FR GB IT NL**

(71) Anmelder: **BAYER AG**
**D-51368 Leverkusen (DE)**

(72) Erfinder: **Magerstedt, Herbert**
**Hölderlinstr. 16**
**D-47445 Moers (DE)**
Erfinder: **Heger, Georg, Dr.**
**Uerdinger Str. 260**
**D-47800 Krefeld (DE)**
Erfinder: **Idel, Karsten-Josef, Dr.**
**Am Schwarzkamp 38**
**D-47802 Krefeld (DE)**
Erfinder: **Paul, Friedemann**
**Peter-Walterscheidt-Str. 65**
**D-51469 Bergisch Gladbach (DE)**

(54) **Mineralisch gefüllte, flammgeschützte Formmassen auf Basis von Polyalkylenterephtalat.**

(57) Thermoplastische Formmassen enthaltend
A) 30 bis 99 Gew.-Teile Polyalkylenterephthalat
B) 0 bis 50 Gew.-Teile Polycarbonat
C) 0 bis 30 Gew.-Teile Pfropfpolymerisat
D) 0,1 bis 20 Gew.-Teile einer oligomeren Phosphorverbindung der Formel (Ia),

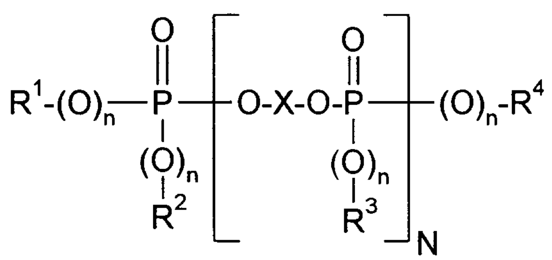

(Ia)

oder 0,1 bis 2 Gew.-Teile einer Mischung aus oligomeren Phosphorverbindung der Formel (Ia) und Phosphorverbindung der Formel (Ib)

EP 0 685 518 A2

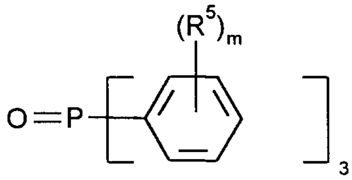

(Ib)

worin

$R^5$ Methyl und m die Zahlen 0 bis 5 sind,

wobei die Menge an Phosphorverbindung der Formel (Ib) in der Phosphatmischung (bezogen auf 100 Gew.-% an Phosphorverbindung der Formel (Ia) und (Ib) 1 bis 50 Gew.-%, beträgt,

E 1) 1 bis 60 Gew.-Teile mineralische Füllstoffe und

E 2) 0 bis 30 Gew.-Teile Füll- und Verstärkungsstoffe, verschieden von E 1).

Die Erfindung betrifft thermoplastische Formmassen auf der Basis von Polyalkylenterephthalat, oligomerer Phosphorverbindung, mineralischen Füllstoffen und gegebenenfalls aromatischem Polycarbonat und/oder Pfropfpolymerisat.

Wie beispielsweise aus der WO 92/11314 bekannt ist, erreicht man durch den Einsatz von Resorcindiphosphat in einem Blend aus PBT/aromatischem Polycarbonat bzw. PBT/Polyetherimid eine gute flammschützende Wirkung.

Weiterhin wird in der EP-A 264 143 beschrieben, daß durch die Zugabe von Diphosphaten in aromatische Polyester eine Agglomeratbildung verhindert wird. DE-OS 2 509 592 und JP 58-76447 beschreiben Polyesterzusammensetzungen, die organische Diphosphate enthalten.

Die Aufgabe der vorliegenden Erfindung ist, eine thermoplastische Formmasse auf Basis Polyalkylenterephthalat bereitzustellen, wobei die daraus erhältlichen Formkörper oder Formteile sich durch eine gute Zähigkeit und Dehnbarkeit auszeichnen.

Es wurde gefunden, daß mit einem mineralgefüllten Polyalkylenterephthalat, welches mit Resorcindiphosphat ausgestattet ist, eine hohe Zähigkeit bei einem gleichzeitig guten Fließverhalten und guten übrigen Eigenschaften ohne Schädigung der thermoplastischen Matrix erzielt wird.

Gegenstand der vorliegenden Erfindung sind thermoplastische Formmassen enthaltend

A) 30 bis 98,9 Gew.-Teile Polyalkylenterephthalat

B) 0 bis 50 Gew.-Teile Polycarbonat

C) 0 bis 30 Gew.-Teile Pfropfpolymerisat,

D) 0,1 bis 20 Gew.-Teile einer oligomeren Phosphorverbindung der Formel (Ia),

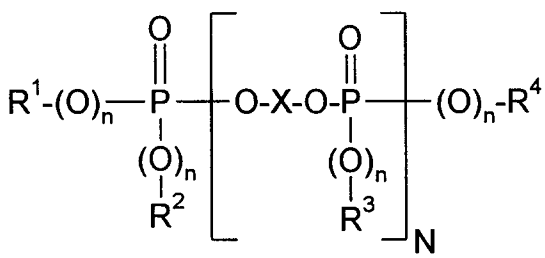

(Ia)

worin

| | |
|---|---|
| $R^1$, $R^2$, $R^3$, $R^4$ | unabhängig voneinander $C_1$-$C_8$-Alkyl, $C_5$-$C_6$-Cycloalkyl, $C_6$-$C_{10}$-Aryl oder $C_7$-$C_{12}$-Aralkyl, |
| n | unabhängig voneinander 0 oder 1, |
| N | eine Durchschnittszahl von 0,5 bis 5 und |
| X | einen ein- oder mehrkernigen aromatischen Rest mit 6 bis 30 C-Atomen bedeuten, |

oder 0,1 bis 20 Gew.-Teile einer Mischung aus oligomeren Phosphorverbindung der Formel (Ib)und Phosphorverbindung der Formel (Ib)

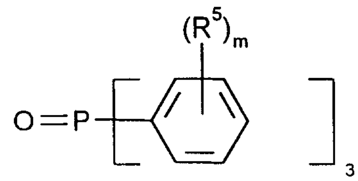

(Ib)

worin

$R^5$ Methyl und m die Zahlen 0 bis 5 sind,

wobei die Menge an Phosphorverbindung der Formel (Ib) in der Phosphatmischung (bezogen auf 100 Gew.-% an Phosphorverbindung der Formel (Ia) und (Ib)) 1 bis 50 Gew.-%, vorzugsweise 3 bis 45 Gew.-%, insbesondere 5 bis 40 Gew.-% beträgt,

E1) 1 bis 60 Gew.-Teile mineralische Füllstoffe und

E2) 0 bis 30 Gew.-Teile Füll- und Verstärkungsstoffe, verschieden von E1).

Im Falle, daß die thermoplastische Formmasse die Komponenten A), B), D) und E) enthält, sind die folgenden Zusammensetzungen bevorzugt:

A) 30 bis 92, insbesondere 65 bis 90 Gew.-Teile Polyalkylenterephthalat,

B) 1 bis 50, insbesondere 5 bis 30 Gew.-Teile Polycarbonat,

D) 1 bis 20, insbesondere 3 bis 15 Gew.-Teile oligomere Phosphorverbindung der Formel (Ia) oder eine Mischung aus Phosphorverbindungen der Formeln (Ia) und (Ib),

E1) 1 bis 60, insbesondere 3 bis 55 Gew.-Teile, ganz besondere 20 bis 55 Gew.-Teile mineralische Füllstoffe und gegebenenfalls

E2) 1 bis 20, insbesondere 5 bis 15 Gew.-Teile Füll- und Verstärkungsstoffe, verschieden von E1).

Im Falle, daß die thermoplastische Formmasse die Komponenten A), D) und E) enthält sind die folgenden Zusammensetzungen bevorzugt:

A) 20 bis 96, insbesondere 40 bis 55 Gew.-Teile Polyalkylenterephthalat,

D) 3 bis 20, insbesondere 5 bis 15 Gew.-Teile oligomere Phosphorverbindung der Formel (Ia) oder eine Mischung aus Phosphorverbindungen der Formeln (Ia) und (Ib),

E1) 1 bis 60, insbesondere 25 bis 55 Gew.-Teile mineralische Füllstoffe und gegebenenfalls

E2) 1 bis 20, insbesondere 5 bis 15 Gew.-Teile Füll- und Verstärkungsstoffe, verschieden von E1).

Im Falle, daß die thermoplastische die Komponenten A), B), C) D) und E) enthält, sind die folgenden Zusammensetzungen bevorzugt:

A) 30 bis 97, insbesondere 42 bis 90 Gew.-Teile Polyalkylenterephthalat,

B) 1 bis 50, insbesondere 5 bis 30 Gew.-Teile Polycarbonat,

C) 5 bis 30, insbesondere 5 bis 25 Gew.-Teile Pfropfpolymerisat

D) 1 bis 20, insbesondere 3 bis 15 Gew.-Teile oligomere Phosphorverbindung der Formel (Ia) oder eine Mischung aus Phosphorverbindungen der Formeln (Ia) und (Ib),

E1) 1 bis 60, insbesondere 3 bis 55 Gew.-Teile mineralische Füllstoffe und gegebenenfalls

E2) 5 bis 20, insbesondere 5 bis 15 Gew.-Teil Füll- und Verstärkungsstoffe, verschieden von E1).

## Komponente A

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80, vorzugsweise 90 Mol.-% bezogen auf die Dicarbonsäurekomponente, Terephthalsäurereste und mindestens 80, vorzugsweise mindestens 90 Mol.-%, bezogen auf die Diolkomponente, Ethylenglykol- und/oder Butandiol-1,4-reste.

Die bevorzugten Polyalkylenterephthalate können neben Terephthalsäureresten bis zu 20 Mol.-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5 Hexandiol-1.6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihdroxy-1,1,3,3-tetramethyl-cyclobutan, 2,2-bis-(3-$\beta$-hydroxyethoxyphenyl)-propan und 2,2-bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.b. in der DE-OS 19 00 270 und der US-PS 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.b. deren Dialkylestern) und Ethylenglykol und/oder Butandiol-1,4 hergestellt worden sind (Polyethylen- und Polybutylentherephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind (Poly-(ethylenglykol/butandiol-1,4)-terephthalate.

Die als Komponente A vorzugsweise verwendeten Polyalkylenterephthalate besitzen im allgemeinen eine Intrinsic-Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25 °C.

## Komponente B

Erfindungsgemäß geeignete, thermoplastische, aromatische Polycarbonate gemäß Komponente B sind solche auf Basis der Diphenole der Formel (II)

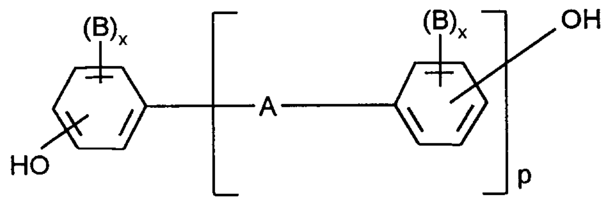

(II)

worin

A eine Einfachbindung, $C_1$-$C_5$-Alkylen, $C_2$-$C_5$-Alkyliden, $C_5$-$C_6$-Cycloalkyliden, - S- oder $-SO_2-$,
B Chlor, Brom
x 0, 1 oder 2 und
p 1 oder 0 sind

oder alkylsubstituierte Dihydroxyphenylcycloalkane der Formel (III),

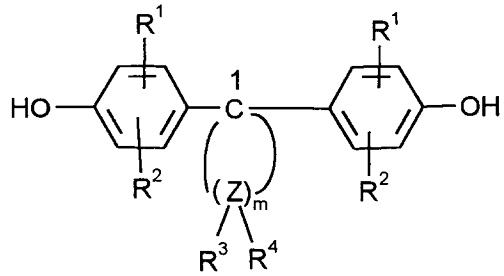

(III)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,
m eine ganze Zahl von 4 bis 7, bevorzugt 4 oder 5,
$R^3$ und $R^4$ für jedes Z individuell wählbar, unabhängig voneinander Wasserstoff oder $C_1$-$C_6$-Alkyl

und

Z Kohlenstoff bedeuten, mit der Maßgabe, daß an mindestens einem Atom Z $R^3$ und $R^4$ gleichzeitig Alkyl bedeuten.

Geeignete Diphenole der Formel (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (II) sind 2,2-Bis(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (III) sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.

Erfindungsgemäß geeignete Polycarbonate sind sowohl Homopolycarbonate als auch Copolycarboante.

Komponente B kann auch eine Mischung der vorstehend definierten thermoplastischen Polycarbonate sein.

Die aromatischen Polycarbonate können nach bekannten Verfahren hergestellt werden, z.B. durch Schmelzumesterung eines entsprechenden Bisphenols mit Diphenylcarbonat und in Lösung aus Bisphenolen und Phosgen. Die Lösung kann homogen sein (Pyridinverfahren) oder heterogen (Zweiphasengrenzflächenverfahren) (vgl. H. Schnell, "Chemistry and Physics of Polycarbonates", Polymer Reviews, Vol. IX, S. 33 ff, Intersciencs Publ. 1964). Das Molekulargewicht kann dabei in bekannter Weise durch eine entsprechende Menge an bekannten Kettenabbrechern eingestellt werden. Geeignete Kettenabbrecher sind z.B. Phenol, p-Chlorphenol, p-tert.-Butylphenol oder 2,4,6-Tribromphenol, aber auch langkettige Alkylphenole gemäß DE-OS 2 842 005 oder Monoalkylphenol bzw. Dialkylphenole mit insgesamt 8 bis 20 C-Atomen in den Alkylsubstituenten (DE-OS 3 506 472) wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol.-%, bezogen auf die Summe der jeweils eingesetzten Diphenole der Formeln (II) und/oder (III).

Die aromatischen Polycarbonate besitzen in der Regel mittlere Molekulargewichte $\overline{M}_w$ von ca. 10 000 bis 200 000, vorzugsweise 20 000 bis 80 000 (ermittelt durch Gelchromatographie nach vorheriger Eichung).

Die erfindungsgemäß geeigneten Polycarbonate A können in bekannter Weise verzweigt sein, und zwar vorzugsweise durch den Einbau von 0,05 bis 2 Mol-%, bezogen auf die Summe der eingesetzten Diphenole, an drei- oder mehr als dreifunktionellen Verbindungen, z.B. solchen mit drei oder mehr phenolischen Gruppen.

Copolycarbonate im Sinne der Erfindung sind ferner Polydiorganosiloxan-Polycarbonat-Blockcopolymere mit mittlerem Molekulargewicht $\overline{M}_w$ von ca. 10 000 bis 200 000, vorzugweise 20 000 bis 80 000 (ermittelt durch Gelchromatographie nach vorheriger Eichung) und mit einem Gehalt an aromatischen Carbonatstruktureinheiten von etwa 75 bis 97,5 Gew.-%, bevorzugt 85 bis 97 Gew.-% und einem Gehalt an Polydiorganosiloxanstruktureinheiten von etwa 25 bis 2,5 Gew.-%, bevorzugt 15 bis 3 Gew.-%, wobei die Blockcopolymeren ausgehend von $\alpha,\omega$-Bishydroxyaryloxyendgruppen-haltigen Polydiorganosiloxanen mit einem Polymerisationsgrad $P_n$ von 5 bis 100, bevorzugt 20 bis 80, hergestellt werden.

Die Polydiorganosiloxan-Polycarbonat-Blockpolymeren können auch eine Mischung aus Polydiorganosiloxan-Polycarbonat-Blockpolymeren mit üblichen polysiloxanfreien, thermoplastischen Polycarbonaten sein, wobei der Gesamtgehalt an Polydiorganosiloxanstruktureinheiten in dieser Mischung ca. 2,5 bis 25 Gew.-% beträgt.

Solche Polydiorganosiloxan-Polycarbonat-Blockcopolymere sind dadurch gekennzeichnet, daß sie in der Polymerkette einerseits aromatische Carbonstruktureinheiten (1) und andererseits Aryloxyendgruppen-haltige Polydiorganosiloxane (2) enthalten,

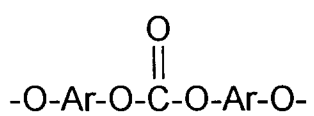

(1)

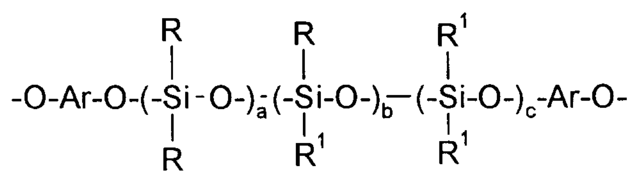

(2)

worin

| | |
|---|---|
| Ar | gleiche oder verschiedene Arylreste aus Diphenolen sind und |
| R und $R^1$ | gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten, |

und

die Anzahl der Diorganosiloxy-Einheiten $n = a + b + c =$ 5 bis 100, vorzugsweise 20 bis 80, ist.

Alkyl ist in vorstehender Formel (2) beispielsweise $C_1$-$C_{20}$-Alkyl, Alkenyl ist in vorstehender Formel (2) beispielsweise $C_2$-$C_6$-Alkenyl; Aryl ist in vorstehender Formel (2) $C_6$-$C_{14}$-Aryl. Halogeniert bedeutet in vorstehender Formel teilweise oder vollständig chloriert, bromiert oder fluoriert.

Beispiele für Alkyle, Alkenyle, Aryle, halogenierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige polydiorganosiloxan-Polycarbonat-Blockcopolymere sind z.B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man $\alpha,\omega$-Bishydroxyaryloxyendgruppen-haltige Polydiorganosiloxane zusammen mit anderen Diphenolen, gegebenenfalls unter Mitverwendung von Verzweigern in den üblichen Mengen, z.B. nach dem Zweiphasengrenzflächenverfahren (s. dazu H. Schnell, Chemistry and Physics of Polycarbonates Polymer Rev. Vol. IX, Seite 22 ff, Interscience Publishers New York 1964) umsetzt, wobei jeweils das Verhältnis der bifunktionellen phenolischen Reaktanten so gewählt wird, daß darauf der erfindungsgemäße Gehalt an aromatischen Carbonatstruktureinheiten und Diorganosiloxy-Einheiten resultiert.

Derartige $\alpha,\omega$-Bishydroxyaryloxyendgruppen-haltige Polydiorganosiloxane sind z.B. aus US 3 419 634 bekannt.

## Komponente C

Die kautschukelastischen Polymerisate umfassen Copolymerisate - insbesondere Pfropfcopolymerisate - mit kautschukelastischen Eigenschaften, die im wesentlichen aus mindestens 2 der folgenden Monomeren erhältlich sind:
Chloropren, Isopren, Isobuten, Styrol, Acrylnitril, Ethylen, Propylen, Vinylacetat und (Meth)Arcylsäureester mit 1 bis 18 C-Atomen in der Alkoholkomponente; also Polymerisate wie sie, z.B. in "Methoden der organischen Chemie" (Houben-Weyl), Bd. 14/1, Georg-Thieme-Verlag, Stuttgart 1961, s. 393 bi 406 und in C.B. Bucknall, "Toughened Plastics", Appl. Science Publishers, London 1977, beschrieben sind. Die Polymerisate besitzen einen Gelgehalt von über 20, vorzugsweise über 40 Gew.-%. Die Glasübergangstemperatur (Tg) liegt unter -20 °C.

Bevorzugte Polymerisate sind selektiv hydrierte Blockcopolymerisate eines vinylaromatischen Monomeren (X) und eines konjugierten Diens (Y) von X-Y-Typ. Diese Blockcopolymerisate können nach bekannten Verfahren hergestellt werden.

Im allgemeinen kann für die Herstellung der geeigneten X-Y-Blockcopolymerisate aus Styrol, $\alpha$-Methylstyrol, Vinyltoluol usw. und aus konjugierten Dienen, wie Butadien, Isopren usw., die für die Herstellung von Styrol-Dien-Blockpolymerisaten verwendete Technologie benutzt werden, die in "Encyclopedia of Polymer Science and Technology", Bd. 15, Interscience, N.Y. (1971) auf den Seiten 508 ff beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben.

Derartige selektiv hydrierte Blockcopolymerisate werden z.B. in der DE-OS 3 000 282 beschrieben.

Bevorzugte Polymerisate sind z.B. mit Styrol und/oder Acrylnitril und/oder (Meth)Acrylsäurealkylestern gepropfte Polybutadiene, Butadien/Styrol-Copolymerisate und Poly(meth)acrylsäureester, z.B. Copolymerisate aus Styrol oder Alkylstyrol und konjugierten Dienen (schlagfestes Polystyrol), d.h. Copolymerisate oder in der DE-OS 1 694 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/- Styrol- oder Butadien/Acrylnitril-Copolymerisate, Polyisobutene oder Polyisoprene, wie sie z.B. in der DE-OS 2 348 377 (= US-PS 3 919 353) bzw. in der DE-A 3 105 364 und DE-A 3 019 233 beschrieben sind.

Besonders bevorzugte Polymerisate sind z.B. ABS-Polymerisate (sowohl Mischals auch Pfropftypen), wie sie z.B. in der DE-OS 2 035 390 (= US-PS 3644 574) oder in der DE-OS 2 248 242 (= GB-PS 1 409 275) beschrieben sind. Beispielsweise genannt sind die folgenden Pfropfpolymerisate aus

C.1) 5 bis 95, vorzugsweise 30 bis 80, Gew.-Teile, einer Mischung aus

C.1.1) 50 bis 95 Gew.-Teilen Styrol, $\alpha$-Methylstyrol, halogen- oder methylkernsubstituiertem Styrol, $C_1$-$C_8$-Alkylmethacrylat, insbesondere Methylmethacrylat, $C_1$-$C_8$-Alkylacrylat, insbesondere Methacrylat, oder Mischungen dieser Verbindungen und

C.1.2) 5 bis 50 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methacrylat, Maleinsäureanhydrid, $C_1$-$C_4$-alkyl- bzw. phenyl-N-substituierte Maleinimide oder Mischungen dieser Verbindungen auf

C.2) 5 bis 95, vorzugsweise 20 bis 70, Gew.-Teilen Polymerisat, mit einer Glasübergangstemperatur unter -10 °C, insbesondere Polybutadien oder Butadien/Styrol-Copolymerisat.

Darüber hinaus sind besonders bevorzugte Polymerisate Pfropfpolymerisate, die durch Pfropfreaktion von

I. 10 bis 40, vorzugsweise 10 bis 35 Gew.-% bezogen auf Pfropfprodukt, mindestens eines (Meth)-Acrylsäureesters und/oder eines Gemisches aus 10 bis 40, vorzugsweise 20 bis 35 Gew.-%, bezogen auf Gemisch, Acrylnitril und 60 bis 90, vorzugsweise 65 bis 80 Gew.-%, bezogen auf Gemisch, Styrol auf

II. 60 bis 90, vorzugsweise 65 bis 90 Gew.-%, bezogen auf Pfropfprodukt, eines Butadien-Polymerisats mit mindestens 70 Gew.-%, bezogen auf II, Butadienresten als Pfropfgrundlage erhältlich sind,

wobei vorzugsweise der Gelanteil der Pfropfgrundlage II ≧70 % (in Toluol gemessen), der Pfropfgrad G 0,15 bis 0,55 und der mittlere Teilchendurchmesser $d_{50}$ des Pfropfpolymerisats C 0,2 bis 0,6 µm, vorzugsweise 0,3 bis 0,5 µm betragen (vgl. z.B. EP 0 131 202).

(Meth)Acrylsäureester I sind Ester der Acrylsäure bzw. Methacrylsäure und einwertiger Alkohole mit 1 bis 8 C-Atomen.

Die Propfgrundlage II kann neben Butadienresten bis zu 30 Gew.-% bezogen auf II, Reste anderer ethylenisch ungesättigter Monomerer, wie z.B. Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat) enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten.

Der Pfropfgrad G bezeichnet das Gew.-Verhältnis von aufgepfropften Pfropfmonomeren zu Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z. und Z. Polymere 250 (1972), S. 782-796) oder mittels Elektronenmikroskopie und anschließende Teilchenauszählung (C. Kämpf, H. Schuster, Angew. Makromolekulare Chemie 14, (1970), S. 111-129) oder mittels Lichtstreuungsmessungen.

Besonders bevorzugte kautschukelastische Polymerisate sind z.B. auch Pfropfpolymerisate aus

a) 25 bis 98 Gew.-%, bezogen auf 100 Gew.-% Pfropfpolymerisat, Acrylatkautschuk mit einer Glasübergangstemperatur unter -20 °C als Pfropfgrundlage und

b) 2 bis 75 Gew.-%, bezogen auf 100 Gew.-% Pfropfpolymerisat, mindestens eines polymerisierbaren, ethylenisch ungesättigten Monomeren, dessen bzw. deren in Abwesenheit von (a) entstandenen Homo- bzw. Copolymerisate eine Glasübergangstemperatur von 25 °C hätten, als Pfropfmonomere.

Die Acrylatkautschuke (a) sind vorzugsweise Polymerisate aus Acrylsäurealkylestern, gegebenenfalls mit bis zu 40 Gew.-% anderer polymerisierbarer, ethylenisch ungesättigter Monomerer. Sofern die als Pfropfgrundlage (a) eingesetzten Acrylatkautschuke - wie nachfolgend beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl-, Ethyl-, Butyl, Octyl- und 2-Ethylhexylester; Halogenalkylester, vorzugsweise Halogen-$C_1$-$C_8$-alkylester, wie Chlorethylacrylat und aromatische Ester wie Benzylacrylat und Phenethylacrylat. Sie können einzeln oder in Mischung eingesetzt werden.

Die Acrylatkautschuke (a) können unvernetzt oder vernetzt, vorzugsweise partiell vernetzt sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen oder gesättigter Polyole mit 2 bis 4 OH-Gruppen und 2 bis 20 C-Atomen, wie z.b. Ethylenglykoldimethacrylat, Allylmethacrylat, mehrfach ungesättigte heterocyclische Verbindungen, wie z.B. Trivinyl- und Triallylcyanurat und -isocyanurat, Tris-acryloyl-s-triazine, insbesondere Triallylcyanurat; polyfunktionelle Vinylverbindungen wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf <1 Gew.-% der Pfropfgrundlage (a) zu beschränken.

Bevorzugte "andere polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylsryrol, Acrylamide, Vinyl-$C_1$-$C_6$-alkylether. Bevorzugte Acrylkautschuke als Pfropfgrundlage (a) sind Emulsionspolymerisate, die einen Gelgehalt von ≧60 Gew.-% aufweisen.

Der Gelgehalt der Pfropfgrundlage (a) wird bei 25 °C in Dimethylformamid bestimmt (M. Hoffmann, H. Krämer, R. Kuhn, Polymeranalytik I und II, Georg-Thieme-Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern

enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Ganz besonders bevorzugt sind die zuvor erwähnten Pfropfpolymerisate aus Polybutadien als Pfropfgrundlage und (Meth)Acrylsäureester und Acrylnitril als Pfropfauflage, wobei die Pfropfgrundlage aus 65 bis 90 Gew.-% Teilen vernetztem Polybutadien mit einem Gelgehalt von über 70 % (in Toluol) und die Pfropfauflage aus einem 5:1 bis 20:1 Gemisch aus Methylmethacrylat und n-butylacrylat bestehen (z.B. DE 3 105 364, DE 3 019 233).

## Komponente D

Die erfindungsgemäßen Polymermischungen enthalten ein oligomeres Phosphat der Formel (Ia):

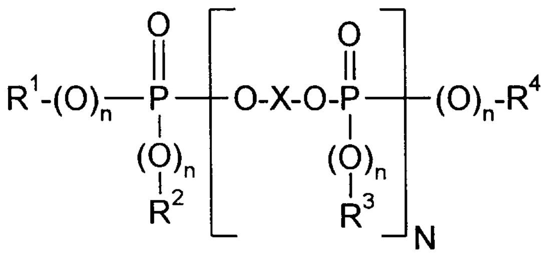

(Ia)

In der Formel bedeuten $R^1$, $R^2$, $R^3$, $R^4$ unabhängig voneinandeer $C_1$-$C_8$-Alkyl, $C_5$-$C_6$-Cycloalkyl, $C_6$-$C_{10}$-Aryl oder $C_7$-$C_{12}$-Aralkyl, bevorzugt sind $C_6$-$C_{10}$-Aryl oder $C_7$-$C_{12}$-Aralkyl. Die aromatischen Gruppen $R^1$, $R^2$, $R^3$ und $R^4$ können ihrerseits mit Halogen- oder Alkylgruppen substituiert sein. Besonders bevorzugte Aryl-Reste sind Kresyl, Phenyl, Xylenyl, Propylphenyl oder Butylphenyl sowie auch die bromierten und chlorierten Derivate davon.

X in der Formel (Ia) bedeutet einen ein- oder mehrkernigen aromatischen Rest mit 6 bis 30 C-Atomen. Dieser leitet sich von Diphenolen ab wie z.B. Bisphenol A, Resorcin oder Hydrochinon oder auch die chlorierten oder bromierten Derivate davon.

n in der Formel (Ia) kann unabhängig voneinander 0 oder 1 sein, vorzugsweise ist n gleich 1.

N kann die Werte 1, 2, 3, 4 odere 5, vorzugsweise zwischen 1 und 2 einnehmen. Als erfindungsgemäße Komponente D können auch Mischungen verschiedener oligomerer Phosphate eingesetzt werden. In diesem Fall hat N einen Durchschnittswert zwischen 1 und 5.

Als Phosphorverbindung der Formel (Ia) wird insbesondere m-Phenylen-bis-(diphenylphosphat) mit N gleich 1 oder 2 bzw. Werten zwischen 1 und 2 eingesetzt.

Die erfindungsgemäßen Mischungen können weiterhin eine Mischung aus Phosphorverbindung(en) der Formel (Ia) und Phosphorverbindung(en) der Formel (Ib),

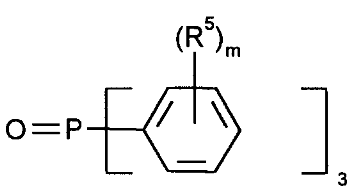

(Ib),

worin

$R^5$ und m  die obengenannte Bedeutung haben,

enthalten.

Als Phosphorverbindung der Formel (Ib) wird vorzugsweise Triphenylphosphat eingesetzt.

Die Phosphate sind generell nach bekannten Verfahren herstellbar (siehe beispielsweise Ullmann, Enzyklopädie der Technischen Chemie, Bd. 18, S. 301 ff, 1979; Houben-Weyl, Methoden der Organischen Chemie, Bd. 12/1, S. 43; Beilstein, Bd. 6. S. 177).

**Komponente E 1**

Als mineralische Füllstoffe sind wasserhaltige oder wasserfreie Carbonate oder Sulfate von Metallen der 2. Hauptgruppe des Periodensystems, wie z.B. Magnesium-Calcium-Carbonat-Hydrat, Calciumcarbonat, Magnesiumcarbonat, Calciumsulfat, Hydroxide von Metallen der 2. und 3. Hauptgruppe des Periodensystems, wie z.B. Calciumhydroxid, Magnesiumhydroxid oder Aluminiumhydroxid, weiterhin Gips oder Hydrotalcid geeignet. Die mineralischen Füllstoffe können allein oder in Kombination verwendet werden. Sie können beispielsweise mit Aminosilanen oder Epoxiden oberflächenbehandelt sein.

Die Magnesium-Calcium-Carbonate können sowohl wasserhaltig als auch wasserfrei sein, z.B. die natürlich vorkommenden Mineralien wie Dolomit und Huntit.

Die basischen Magnesiumcarbonate können ebenfalls sowohl in wasserhaltiger als auch wasserfreier Form eingesetzt werden, z.B. das natürlich vorkommende wasserhaltige Mineral Hydromagnesit ($Mg_5(CO_3)_4(OH)_2 \cdot 4\ H_2O$).

Bevorzugt sind Carbonate und Sulfate von Metallen der 2. Hauptgruppe. Besonders bevorzugt ist Magnesium-Calcium-Carbonat-Hydrat.

Als Magnesium-Calcium-Carbonat-Hydrat gemäß dieser Erfindung wird handelsübliches natürliches Mineral mit oder ohne Oberflächenbehandlung verwendet. Zur Oberflächenbehandlung werden in der Regel Aminosilane verwendet. Feinteiliges (0,4 - 10 microns) Mg-Ca-Carbonat-Hydrat, wie beispielsweise Securoc® PBT/PP (Incemin AG) können verwendet werden.

**Komponente E 2**

Die mineralisch gefüllten Formmassen können zusätzlich noch bis zu 60, vorzugsweise 10 bis 40 Gew.-%, bezogen auf die gefüllte Formmasse, Verstärkungsstoffe enthalten. Die Glasfasern, die im allgemeinen einen Faserdurchmesser zwischen 8 und 14 $\mu$m haben, können als Endlosfasern oder als geschnittene oder gemahlene Glasfasern eingesetzt werden, wobei die Fasern mit einem geeigneten Schlichtesystem und einem Haftvermittler bzw. Haftvermittlersystem auf Silanbasis ausgerüstet sein können.

Füllstoffe, die auch verstärkend wirken können, sind beispielsweise Glaskugeln, Glimmer, Silikate, Quarz, Talkum, Titandioxid, Wollastonit. Diese Füllstoffe können wie die Glasfasern ebenfalls mit einer Schlichte und/oder einem Haftvermittler oder Haftvermittler-System versehen sein.

Bevorzugt sind Glasfasern.

Die erfindungsgemäßen Formmassen können übliche Additive, wie Gleit- und Entformungsmittel, Nukleiermittel, Antistatika, Stabilisatoren sowie Farbstoffe und Pigmente enthalten.

Die erfindungsgemäßen Formmassen, bestehend aus den Komponenten A bis E und gegebenenfalls weiteren bekannten Zusätzen wie Stabilisatoren, Farbstoffen, Pigmenten, Gleit- und Entformungsmitteln, Verstärkungsstoffen, Nukleiermittel sowie Antistatika, werden hergestellt, indem man die jeweiligen Bestandteile in bekannter Weise vermischt und im allgemeinen bei Temperaturen von 230 °C bis 330 °C in üblichen Aggregaten wie Innenknetern, Extrudern und Doppelwellenschnecken schmelzcompoundiert oder schmelzextrudiert.

Gegenstand der vorliegenden Erfindung ist somit auch ein Verfahren zur Herstellung von thermoplastischen Formmassen, bestehend aus den Komponenten A bis E sowie gegebenenfalls Stabilisatoren, Farbstoffen, Pigmenten, Gleit- und Entformungsmitteln, Füll- und Verstärkungsstoffen, Nukleiermitteln sowie Antistatika, das dadurch gekennzeichnet ist, daß man die Komponenten A bis E sowie gegebenenfalls Stabilisatoren, Farbstoffe, Pigmente, Fließmittel, Füll- und Verstärkungsstoffe, Gleit- und Entformungsmittel, Nukleiermittel und/oder Antistatika nach erfolgter Vermischung im allgemeinen bei Temperaturen von 230 bis 330 °C in gebräuchlichen Aggregaten schmelzcompoundiert oder schmelzextrudiert.

Die Formmassen der vorliegenden Erfindung können zur Herstellung von Formkörpern jeder Art verwendet werden. Aus den Formmassen hergestellte Formkörper können Bauteile aus dem Elektrosektor sein, für die eine hohe Zähigkeit bei einem gleichzeitig guten Fließverhalten, ohne Schädigung der thermoplastischen Matrix gewünscht werden.

So kommen z.B. Gehäuseteile, Steckerleisten und Leuchtensockel sowie Teile aus dem Kraftfahrzeugsektor zum Einsatz.

## Beispiele

### Komponente A

Polybutylenterephthalat mit einer relativen Lösungsviskosität von 1,185 gemessen in einer 0,5 %igen Lösung aus Phenol und o-Dichlorbenzol (Mischungsverhältnis 1:1 Gewichtsteile)

### Komponente D

m-Phenylen-bis(diphenyl-phosphat) (Fyroflex® RDP der Firma Akzo)

### Komponente E 1

Magnesium-Calcium-Carbonat-Hydrat (Securoc® PBT/PP, Incemin AG), Glühverlust bei 1 050 °C = 54 %, MgO-Gehalt = 40 %, CaO-Gehalt = 5,5 %).

### Komponente E 2

Glasfasern: Owens Corning Typ OC 29 R
Die in den Beispielen angegebenen Komponenten werden gemischt und in einer Spritzgußmaschine bei üblichen PBT-Verarbeitungsbedingungen (Massetemperatur ca. 260 °C) zu Prüfkörpern verarbeitet.

Diese Prüfkörpern werden auf ihre Eigenschaften hin überprüft.

| | Bsp.A Vergl. | Bsp.1 | Bsp.2 | Bsp.B Vergl. | Bsp.3 | Bsp.4 | Bsp.5 | Bsp.C Vergl. | Bsp.6 | Bsp.D Vergl. | Bsp.7 | Bsp.E Vergl. | Bsp.8 |
|---|---|---|---|---|---|---|---|---|---|---|---|---|---|
| PBT | 69,4 | 66,4 | 62,4 | 41,5 | 40,5 | 38,5 | 36,5 | 54,5 | 51,5 | 49,5 | 46,5 | 44,5 | 41,5 |
| Securoc PBT/PP | 30,0 | 30,0 | 30,0 | 50,0 | 50,0 | 50,0 | 50,0 | 45,0 | 45,0 | 50,0 | 50,0 | 55,0 | 55,0 |
| Stabilisator[1)] | 0,1 | 0,1 | 0,1 | - | - | - | - | - | - | - | - | - | - |
| Entformungshilfsmittel[2)] | 0,5 | 0,5 | 0,5 | 0,5 | 0,5 | 0,5 | 0,5 | 0,5 | 0,5 | 0,5 | 0,5 | 0,5 | 0,5 |
| Glasfaser[3)] | - | - | - | 8,0 | 8,0 | 8,0 | 8,0 | - | - | - | - | - | - |
| Fyroflex RDP | - | 3,0 | 7,0 | - | 1,0 | 3,0 | 5,0 | - | 3,0 | - | 3,0 | - | 3,0 |
| Ergebnisse | | | | | | | | | | | | | |
| 1. Randfaserdehnung bei Höchstkraft aus dem Biegeversuch 5 mm/min. ISO 178, DIN 53452, Stab 80x10x4mm (%) | | | | | | | | | | | | | |
| | 3,7 | 5,7 | 6,0 | 1,4 | 1,6 | 1,8 | 2,2 | 2,2 | 2,8 | 1,5 | 2,2 | 1,4 | 2,1 |
| 2. Biegespannung bei Höchstkraft, 5 mm/min. ISO 178, DIN 53452, Stab 80x10x4mm ($N/mm^2$) | | | | | | | | | | | | | |
| | 109 | 96 | 75 | 120 | 128 | 123 | 111 | 111 | 98 | 101 | 90 | 99 | 93 |
| 3. E-Modul (3-Pkt.-Biegeversuch), 2 mm/min, DIN 53457-B3, Stab 80x10x4mm ($N/mm^2$) | | | | | | | | | | | | | |
| | 4850 | 3790 | 3010 | 10300 | 10400 | 9320 | 7590 | 6950 | 5720 | 8300 | 6030 | 8600 | 6910 |
| 4. Schlagzähigkeit (IZOD) an, 23°C, ISO 180/1U, Stab 80x10x4mm ($kJ/m^2$) | | | | | | | | | | | | | |
| | 29 | 32 | 29 | 18 | 22 | 22 | 24 | 24 | 24 | 18 | 21 | 15 | 21 |

1) Phospitstabilisator
2) E-Wachs
3) Glasfaser Typ OCR Ovens Corning

## Patentansprüche

**1.** Thermoplastische Formmassen enthaltend
A) 30 bis 98,9 Gew.-Teile Polyalkylenterephthalat

B) 0 bis 50 Gew.-Teile Polycarbonat

C) 0 bis 30 Gew.-Teile Pfropfpolymerisat

D) 0,1 bis 20 Gew.-Teile einer oligomeren Phosphorverbindung der Formel (I),

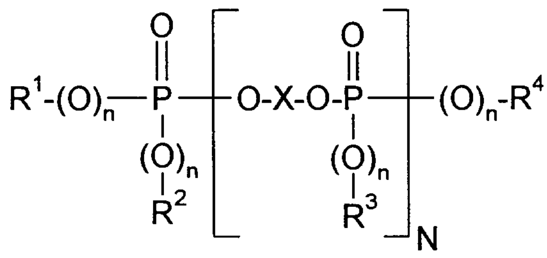

(Ia)

worin

| | |
|---|---|
| $R^1$, $R^2$, $R^3$, $R^4$ | unabhängig voneinander $C_1$-$C_8$-Alkyl, $C_5$-$C_6$-Cycloalkyl, $C_6$-$C_{10}$-Aryl oder $C_7$-$C_{12}$-Aralkyl, |
| n | unabhängig voneinader 0 oder 1, |
| N | eine Durchschnittszahl von 0,5 bis 5 und |
| X | einen ein- oder mehrkernigen aromatischen Rest mit 6 bis 30 C-Atomen bedeuten, |

oder 0,1 bis 2 Gew.-Teile einer Mischung aus oligomeren Phosphorverbindung der Formel (Ia) und Phosphorverbindung der Formel (Ib)

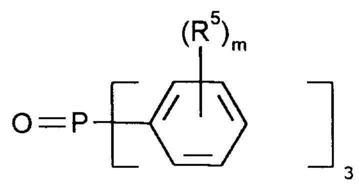

(Ib)

worin

$R^5$ Methyl und m die Zahlen 0 bis 5 sind,

wobei die Menge an Phosphorverbindung der Formel (Ib) in der Phosphatmischung (bezogen auf 100 Gew.-% an Phosphorverbindung der Formel (Ia) und (Ib) 1 bis 50 Gew.-% beträgt,

E 1) 1 bis 60 Gew.-Teile mineralische Füllstoffe und

E 2) 0 bis 30 Gew.-Teile Füll- und Verstärkungsstoffe, verschieden von E 1).

**2.** Thermoplastische Formmassen gemäß Anspruch 1, enthaltend

A) 30 bis 92 Gew.-Teile Polyalkylenterephthalat,

B) 1 bis 50 Gew.-Teile Polycarbonat,

D) 1 bis 20 Gew.-Teile oligomere Phosphorverbindung der Formel (Ia) oder Mischung aus Phosphorverbindung der Formel (Ia) und (Ib)

E1) 1 bis 60 Gew.-Teile mineralische Füllstoffe und gegebenenfalls

E2) 1 bis 20 Gew.-Teile Füll- und Verstärkungsstoffe, verschieden von E1).

**3.** Thermoplastische Formmasse gemäß Anspruch 1, enthaltend

A) 20 bis 96 Gew.-Teile Polyalkylenterephthalat,

D) 3 bis 20 Gew.-Teile oligomeren Phosphorverbindung der Formel (Ia) oder eine Mischung aus Phosphorverbindung der Formeln (Ia) und (Ib),

E1) 1 bis 60 insbesondere 25 bis 55 Gew.-Teile mineralische Füllstoffe und gegebenenfalls

E2) 1 bis 20 Gew.-Teile Füll- und Verstärkungsstoffe, verschieden von E1).

**4.** Thermoplastische Formmasse gemäß Anspruch 1, enthaltend

A) 30 bis 97 Gew.-Teile Polyalkylenterephthalat,

B) 1 bis 50 Gew.-Teile Polycarbonat,

C) 5 bis 30 Gew.-Teile Pfropfpolymerisat
D) 1 bis 20 Gew.-Teile oligomere Phosphorverbindung der Formel (Ia) oder eine Mischung aus Phosphorverbindung der Formeln (Ia) und (Ib),
E1) 1 bis 60 Gew.-Teile und gegebenenfalls
E2) 5 bis 20 Gew.-Teil Füll- und Verstärkungsstoffe, verschieden von E1).

**5.** Thermoplastische Formmasse gemäß Anspruch 1, worin Komponente E 1) ausgewählt ist aus der Gruppe wasserhaltiger oder wasserfreier Carbonate oder Sulfate von Metallen der 2. Hauptgruppe des Periodensystems, Hydroxide von Metallen der 2. oder 3. Hauptgruppe des Periodensystems, Gips, Hydrotalcid oder Mischungen daraus.

**6.** Thermoplastische Formmasse gemäß Anspruch 1, enthaltend Zusatzstoffe ausgewählt aus der Gruppe der Stabilisatoren, Farbstoffe, Pigmente, Gleit- und Entformungsmittel, Nukleiermittel und Antistatika.

**7.** Verwendung der Formmassen gemäß Anspruch 1 zur Herstellung von Formkörpern.